# EUROPÄISCHE PATENTANMELDUNG

(11) **EP 2 251 367 A1**
(43) Veröffentlichungstag der Anmeldung: **17.11.2010**
(21) Anmeldenummer: 09290351.7
(22) Anmeldetag: 12.05.2009
(51) Int. Cl.: C08F 290/06, C08G 69/26, C08G 69/28, C08G 69/48, C09D 11/10, C09D 177/10

(54) **Acrylat-Gruppen enthaltende Harze**

(71) Anmelder: Cognis IP Management GmbH, 40589 Düsseldorf (DE)
(72) Erfinder: Busch, Stefan, 40597 Düsseldorf (DE); Baro, Jürgen, 73732 Esslingen (DE); Druene, Laurence, 77930 Perthes en Gatinais (FR); Ballin, Jean-Marc, 93160 Noisy le Grand (FR)

(57) **Zusammenfassung**

Bei 25°C flüssige Acrylat-Gruppen enthaltende Harze, dadurch erhältlich, dass man in einer ersten Stufe Polycarbonsäuren (a), die pro Molekül mindestens 2 Carboxylgruppen und mindestens 2 C-Atome enthalten mit Polyaminen (b), die pro Molekül mindestens 2 Aminogruppen und mindestens 2 C-Atome enthalten, derart umsetzt, dass eine Zwischenverbindung (z) resultiert, die Carboxylgruppen-terminiert ist und diese Zwischenverbindung (z) in einer zweiten Stufe derart funktionalisiert, dass man deren freie Carboxylgruppen in ein oder mehreren Stufen mit ein oder mehreren (Meth)acrylatgruppen ausrüstet, eignen sich als strahlungshärtbare Verbindungen zur Herstellung von Beschichtungen.

## Beschreibung

### Gebiet der Erfindung

Die Erfindung betrifft spezielle bei 25°C flüssige Acrylat-Gruppen enthaltende Harze, deren Herstellung und ihre Verwendung für strahlungshärtbare Beschichtungen.

### Stand der Technik

EP-B-1,828,273 beschreibt strahlungshärtbare Acrylat-modifizierte Aminoamidharze. Dabei handelt es sich um Michael-Additionsprodukte von (a) thermoplastischen Aminoamid-Polymeren, die sich von polymerisierbaren ungesättigten Fettsäuren (z.B. Dimerfettsäuren) ableiten und (b) Polyolestern mit wenigstens drei (Meth)acrylatestergruppen pro Molekül, wobei das thermoplastische Aminoamid-Polymer a) eine Aminzahl im Bereich von 40-60 mg KOH/g aufweist und das Verhältnis der funktionellen (Meth)acrylatgruppen des Polyolesters b) zu den initialen funktionellen Aminogruppen des Aminoamid.Polymers a) wenigstens 4 : 1 beträgt und das Harz bei 25 °C flüssig ist. Diese Harze, bei denen es sich strukturell um spezielle acrylierte Polyamidoamine (APAA) handelt - dieser Ausdruck wird im Folgenden beibehalten - finden Verwendung als strahlenhärtbarer Bestandteil von Druckfarben und Lacken.

Die Synthese der speziellen APAAs erfolgt gemäß der Druckschrift EP-B-1,828,273 durch Kondensation von Dimerfettsäuren mit geeigneten Diaminen - beispielsweise Piperazin - und anschließende Umsetzung des dabei erhaltenen Polyamidoamids mit Polyolacrylaten wie Glycerin-3,8PO-triacrylat (GPTA) in einer Michael-Addition. Zur Vermeidung von Vernetzungsreaktionen wird das Polyolacrylat stets in hohem Überschuss eingesetzt; zugleich wird so auch die Viskosität des erhaltenen Produktes soweit erniedrigt, wie es die Anwendung in der Druckfarbenformulierung erfordert - das Polyolacrylat fungiert hier quasi als Reaktivverdünner.

Unter Michael-Addition ist die Additionsreaktion einer Aminogruppe an eine aktivierte C=C-Doppelbindung (typischerweise eines Esters) zu verstehen. Dies lässt sich formal durch folgende Reaktionsgleichung ausdrücken:

NH + C=C-C(O) --> NC-CH-C(O)

Solche Reaktionen laufen bei mäßiger Erwärmung im Allgemeinen spontan ab. Man kann jedoch auch Katalysatoren zur Beschleunigung der Michael-Addition einsetzen. Auch wenn streng genommen diese Art der Reaktion besser als Michael-analoge Reaktion zu bezeichnen wäre, so wird in der vorliegenden Anmeldung die in der zitierten Patentliteratur verwendete griffigere Bezeichnung Michael-Addition beibehalten.

WO 07/030643 A1 (Sun Chemical) setzt Michael-Addukte von Polyolester-Acrylaten mit Polyaminoamiden für Druckfarben ein, wobei das Polyaminoamid das Umsetzungsprodukt eines Polyamins mit einer Säurekomponente ist, mit der Maßgabe, dass diese Säurekomponente zwei obligatorische Bestandteile enthält, nämlich (a) eine polymerisierte ungesättigte Fettsäure (z.B. Dimerfettsäure) und (b) eine Fettsäure mit 2 bis 22 C-Atomen. Als wichtiges Merkmal der WO2007/030643 erscheint mithin, dass die Herstellung eines APAA-Harzes unter Zusatz einer Monocarbonsäure geschieht. Das letztlich erhaltene Produkt soll beim Druckvorgang zu einer gegenüber herkömmlichen Druckfarben verminderten Bildung von Farbnebeln führen.

### Beschreibung der Erfindung

Strahlungshärtbare acrylierte Polyamidoamine (APAAs) haben einerseits eine gewisse Tradition, andererseits besteht ständiger Bedarf an Verbesserungen. Vor diesem Kontext war es eine Aufgabe der vorliegenden Erfindung, neue strahlungshärtbare (Meth)acrylat-Gruppen enthaltende, bei 25 °C flüssige Harze bereitzustellen. Diese sollten sich generell für Beschichtungszwecke eignen und insbesondere für Druckfarben, vorzugsweise Offsetdruckfarben.

Ein Nachteil der oben beschrieben Verfahren des Standes der Technik besteht darin, dass als Reaktivverdünner immer dasjenige Acrylat eingesetzt werden muss, das auch zur Synthese des APAAs herangezogen wird. So ist beispielsweise die Herstellung eines OPTAterminierten APAAs in TMP+3PC-triacrylat (TMPPOTA) nicht möglich. Vor diesem Hintergrund bestand eine weitere Aufgabe der vorliegenden Erfindung darin, ein Verfahren zur Verfügung zu stellen, das es gestattet, die zu entwickelnden strahlungshärtbare (Meth)acrylatgruppen enthaltenden bei 25 °C flüssigen Harze unter Einsatz beliebiger Verdünner, insbesondere Reaktiwerdünner, herzustellen.

Gegenstand der vorliegenden Erfindung sind bei 25 °C flüssige Acrylat-Gruppen enthaltende Harze, dadurch erhältlich, dass man in einer ersten Stufe Polycarbonsäuren (a), die pro Molekül mindestens 2 Carboxylgruppen und mindestens 2 C-Atome enthalten mit Polyaminen (b), die pro Molekül mindestens 2 Aminogruppen und mindestens 2 C-Atome enthalten, derart umsetzt, dass eine Zwischenverbindung (z) resultiert, die Carboxylgruppen-terminiert ist und diese Zwischenverbindung (z) in einer zweiten Stufe derart funktionalisiert, dass man deren freie Carboxylgruppen in ein oder mehreren Stufen mit ein oder mehreren (Meth)acrylatgruppen ausrüstet.

Unter dem Begriff "Acrylat-Gruppen" werden im Rahmen der vorliegenden Erfindung sowohl Acrylatgruppen als auch Methacrylatgruppen verstanden. Dies dient der terminologischen Vereinfachung.

Der Klarheit halber sei ausdrücklich betont, dass zwischen den oben geschilderten Harzen des Standes der Technik (den APPAs) und den Harzen gemäß der vorliegenden Erfindung ein struktureller Unterschied besteht. Zwar haben die Harze gemäß der vorliegenden Erfindung dem oben referierten Stand der Technik gemeinsam, dass das Harz ein Polymer darstellt, das als Grundbausteine Polycarbonsäuren (insbesondere Dimerfettsäuren) und Polyamine (insbesondere Piperazin) enthält und sich durch terminale Acrylat-Gruppen auszeichnet. Jedoch bestehen auch fundamentale Unterschiede: Gemäß dem referierten Stand der Technik wird ein Harz hergestellt, indem in der ersten Stufe ein durch Umsetzung von Polycarbonsäure und Polyaminin ein Polyamidoamin hergestellt wird, welches seiner Natur gemäß Aminogruppenterminiert ist und an dieses Polyamidoamin wird ein weiterer Baustein via Michael-Addition (Addition von NH an C=C) angedockt. Gemäß der vorliegenden Erfindung jedoch wird die erste Stufe, also die Umsetzung von Polycarbonsäure und Polyaminin so geführt, dass eine Carboxylgruppen-terminierte Zwischenverbindung entsteht und diese Zwischenverbindung wird dann derart funktionalisiert, dass man deren freie Carboxylgruppen in ein oder mehreren Stufen mit ein oder mehreren (Meth)acrylatgruppen ausrüstet werden.

### Zu den Polycarbonsäuren (a)

Die Polycarbonsäuren (a) enthalten pro Molekül mindestens 2 Carboxylgruppen und mindestens 2 C-Atome. Vorzugsweise handelt es sich bei den Polycarbonsäuren (a) um Dicarbonsäuren mit 2 bis 54 C-Atomen pro Molekül.

In einer Ausfüluruugsform wählt man die Dicarbonsäuren aus der Gruppe der Dimerfettsäuren, der aliphatischen alpha,omega-Dicarbonsäuren mit 2 bis 22-C-Atomen und der zweibasischen aromatischen Carbonsäuren mit 8 bis 22 C-Atomen.

Als Dicarbonsäuren setzt man vorzugsweise Dimerfettsäuren ein. Wie dem Fachmann wohlbekannt handelt es sich bei Dimerfettsäuren um Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind in dem Produktgemisch auch geringe Anteile an Monomeren (die Summe der Monomeren im Rohgemisch der Dimerfettsäuren bezeichnet der Fachmann als Monomerfettsäuren) sowie an höheren Oligomeren, insbesondere an sogenannten Trimerfettsäuren, enthalten. Dimerfettsäuren sind handelsübliche Produkte und werden in verschiedenen Zusammensetzungen und Qualitäten angeboten (z. B. unter der Markenbezeichnung Empol® der Anmelderin).

In einer Ausführungsform setzt man als Dicarbonsäuren alpha,omega-Dicarbonsäuren mit 2 bis 22-C-Atomen ein, insbesondere gesättigte Dicarbonsäuren dieser Art. Beispiele hierfür sind: Ethandicarbonsäure (Oxalsäure), Propandicarbonsäure (Malonsäure), Butandicarbonsäure (Bernsteinsäure), Pentandicarbonsaure (Glutarsäure), Hexandicarbonsäure (Adipinsäure), Heptandicarbonsäure (Pimelinsäure), Octandicarbonsäure (Korksäure), Nonandicarbonsäure (Azelainsäure), Decandicarbonsäure (Sebacinsäure), Undecandicarbonsäure, Dodecandicarbonsäure, Tridecandicarbonsäure (Brassylsäure), Tetradecandicarbonsäure, Pentadecandicarbonsäure, Hexadecandicarbonsäure (Thapsisäure), Heptadecandicarbonsäure, Octadecandicarbonsäure, Nonadecandicarbonsäure, Eicosandicarbonsäure.

In einer Ausführungsform setzt man als Dicarbonsäuren zweibasische aromatische Carbonsäuren mit 8 bis 22 C-Atomen ein, beispielsweise Isophthalsäure.

In einer Ausführungsform setzt man Mischungen verschiedener Dicarbonsäuren ein, etwa Dimerfettsäure in Mischung mit mindestens einer Säure aus der Gruppe der alpha,omega-Dicarbonsäuren mit 2 bis 22-C-Atomen.

### Zu den Polyaminen (b)

Die Polyamine (b) enthalten pro Molekül mindestens 2 Aminogruppen und mindestens 2 C-Atome. Vorzugsweise handelt es sich bei den Polyaminen (b) um Diamine mit 2 bis 36 C-Atomen pro Molekül. Beispiele für geeignete Diamine sind Ethylendiamin, Hexamethylendiamin, Diaminopropan, Piperazin, Aminoethylpiperazin, 4,4'-Dipiperidin, Toluoldiamin, Methylendianilin, Xyloldiamin, Methylpentamethylendiamin, Diaminocyclohexan, Polyetherdiamin und aus Dimersäure hergestellte Diamine.

Dabei wählt man die Diamine insbesondere aus der Gruppe Ethylendiamin, Hexamethylendiamin, Diaminopropan, Piperazin und Aminoethylpiperazin. Piperazin und Aminoethylpiperazin sind ganz besonders bevorzugt.

In einer Ausführungsform setzt man Mischungen verschiedener Diamine ein.

### Zur Zwischenverbindung (z)

Wie bereits ausgeführt zeichnet sich die Zwischenverbindung (z), die durch Umsetzung der Polycarbonsäuren (a) mit den Polyaminen (b) entsteht, dadurch aus, dass sie Carboxylgruppen-terminiert ist. Dementsprechend kann man die Zwischenverbindungen (z) auch als Carboxylgruppen-terminierte Polyamide bezeichnen. Auf welche Weise die Polycarbonsäuren (a) mit den Polyaminen (b) mit der Folge umgesetzt werden, dass die resultierende Zwischenverbindung (z) Carboxylgruppen-terminiert ist, ist an sich keiner besonderen Einschränkung unterworfen. Mithin kommt jede technische Maßnahme in Frage, die bewirkt, dass die Verbindungen (z) Carboxylgruppen-terminiert ist. Dies kann beispielsweise durch Kontrolle des Umsetzungsverhältnisses der Reaktanden (a) und (b) geschehen.

Die Umsetzung der Polycarbonsäuren (a) mit den Polyaminen (b) zu den Zwischenverbindungen (z) kann gewünschtenfalls in Gegenwart eines Verdünners oder Reaktivverdünner durchgeführt werden, mit der Maßgabe, dass Verdünner bzw. Reaktivverdünner keine freien Hydroxy-, Carboxyl- und/oder Amingruppen enthalten.

Sofern Dimerfettsäure als Dicarbonsäure (a) eingesetzt wird, entsteht auf diese Weise durch Umsetzung mit unterschüssigem Diamin (b) ein Carboxylgruppen-terminiertes Polyamid (z), das man auch als das Polyamidodimerat bezeichnen könnte. Ein Unterschuß an Diamin (b) erlaubt außerdem eine im Vergleich zur Polyamidoaminsynthese des referierten Standes der Technik vereinfachte Reaktionsführung, da während der Kondensation kein Diamin durch Sublimation verloren geht. Zudem kann auf die Zugabe von Wasser, das zur Rückführung sublimierten Diamins in das Reaktionsgefäß dient, verzichtet werden - es muss also im Laufe der Kondensation nicht wieder abgetrennt werden.

Optional kann bei der Umsetzung von Polycarbonsäure (insbesondere Dicarbonsäure und ganz besonders Dimerfettsäure) (a) und Polyamin (insbesondere Diamin und ganz besonders Piperazin) (b) zur Beeinflussung der Funktionalität und des Molgewichts der resultierenden Zwischenverbindung (z) eine monofunktionelle Säure, insbesondere eine Monocarbonsäure mit 6 bis 12 C-Atomen zugesetzt werden. Vorzugsweise setzt man dabei die Monocarbonsäuren in einer Menge ein, die im Bereich von 1-25% der Säuregruppen - bezogen auf die Gesamtzahl der Säuregruppen ex Dicarbonsäuren und Monocarbonsäuren - liegt.

### Zur Überführung der Zwischenverbindung (z) in das acrylierte Harz

Wie bereits gesagt wird die Carboxylgruppen-terminierte Zwischenverbindung (z) schließlich derart funktionalisiert, dass man deren freie Carboxylgruppen in ein oder mehreren Stufen mit ein oder mehreren Acrylatgruppen ausrüstet. Wobei unter Acrylatgruppen - wie bereits oben angeführt - sowohl Acrylat- als auch Methacrylatgruppen zu verstehen sind.

Dies bedeutet, dass man die freien Carboxylgruppen der Zwischenverbindung (z) vollständig oder überwiegend derart funktionalisiert, dass pro funktionalisierter Carboxylfunktion ein oder mehrere Acrylatgruppen resultieren. Beispielhaft seien für diese Funktionalisierung zwei Wege offenbart:
In einer Ausführungsform setzt man die Zwischenverbindungen (z) mit hydroxyfunktionellen Polyolacrylaten um, die pro Molekül mindestens eine freie OH-Gruppe und mindestens eine Acrylatgruppe enthalten. Unter hydroxyfunktionellen Polyolacrylaten (Hydroxypolyolacrylate) im Sinne der vorliegenden Erfindung sind mit anderen Worten Ester zu verstehen, die bei der Umsetzung von Polyolen (ausdrücklich sei festgestellt, dass anstelle der Polyole auch deren Anlagerungsprodukte mit Ethylen- und/oder Propylenoxid eingesetzt werden können) mit Acryl- bzw. Methacrylsäure entstehen, mit der Maßgabe, dass die Umsetzung so geführt wird, dass die resultierenden Produkte mindestens eine freie OH-Gruppe pro Molekül aufweisen.

Geeignete hydroxyfunktionelle Polyolacrylate sind beispielsweise Pentaerythrit-triacrylat (PETIA), Pentaerythrit+5EO-triacrylat (Triacrylat eines Anlagerungsproduktes von 5 mol Ethylenoxid an 1 mol Pentaerytrit) oder Dipentaerythrit-pentaacrylat. Es können auch Mischungen verschiedener Hydroxypolyolacrylate eingesetzt werden.

In einer weiteren Ausführungsform setzt man die Zwischenverbindungen (z) zunächst mit einem Dialkanolamin, insbesondere Diethanolamin (NH[CH₂-CH₂-OH]₂) im Sinne einer A-midierung um, wobei die Carboxylgruppen der Verbindungen (z) mit den Aminogruppe reagieren, wobei eine hydroxylgruppen-terminierte Zwischenverbindung (z*) entsteht. Anschließend verestert man diese Verbindung (z*) durch Umsetzung mit Acryl- oder Methacrylsäure.

In einer weiteren Ausführungsform setzt man die Zwischenverbindungen (z) zunächst mit einem Polyol, das mindestens zwei OH-Gruppen, vorzugsweise jedoch drei oder mehr OH-Gruppen pro Molekül enthält, in der Weise um, dass nur eine OH-Gruppe pro Molekül Polyol reagiert, wobei eine hydroxylgruppen-terminierte Zwischenverbindung (z**) entsteht. Anschließend verestert man diese Verbindung (z**) durch Umsetzung mit Acryl- oder Methacrylsäure.

Die Überführung der Zwischenverbindung (z) in das acrylierte Harz kann gewünschtenfalls in Gegenwart eines Verdünners oder Reaktivverdünner durchgeführt werde.

Ein weiterer Gegenstand der vorliegenden Erfindung sind strahlungshärtbare BeschichtungsZusammensetzungen enthaltend eine vernetzbare Verbindung und einen Photoinitiator, wobei die vernetzbare Verbindung mindestens ein acryliertes Harz gemäß der vorliegenden Erfindung enthält. Dabei gelten hinsichtlich des acrylierten Harzes alle obigen Ausführungen. In einer bevorzugten Ausführungsform handelt es sich bei diesen Zusammensetzungen um solche, die zusätzlich ein Pigment enthält und die somit Druckfarben sind; vorzugsweise werden derartige Zusammensetzungen für den Offsetdruck verwendet.

Ein weiterer Gegenstand der vorliegenden Erfindung ist ein Verfahren zur Herstellung der erfindungsgemäßen Harze, indem man in einer ersten Stufe Polycarbonsäuren (a), die pro Molekül mindestens 2 Carboxylgruppen und mindestens 2 C-Atome enthalten mit Polyaminen (b), die pro Molekül mindestens 2 Aminogruppen und mindestens 2 C-Atome enthalten, derart umsetzt, dass eine Zwischenverbindung (z) resultiert, die Carboxylgruppen-terminiert ist und diese Zwischenverbindung (z) in einer zweiten Stufe derart funktionalisiert, dass man deren freie Carboxylgruppen in ein oder mehreren Stufen mit ein oder mehreren (Meth)acrylatgruppen ausrüstet. In einer Ausführungsform führt man dabei die erste und/oder zweite Stufe in Gegenwart eines Verdünners oder Reaktivverdünners durch, mit der Maßgabe, dass Verdünner bzw. Reaktivverdünner Hydroxy-, Carboxyl- und/oder Amingruppen-frei sind, sofern sie in der ersten Stufe eingesetzt werden. In einer weiteren Ausführungsform führt man die erste Stufe des Verfahrens in Gegenwart einer Monocarbonsäure mit 6 bis 12 C-Atomen durch.

### Beispiele

### Beispiel 1

188,00g (0,34 mol) Dimerfettsäure (Pripol 1013, Croda) wurden in einem 0,51-Vierhalskolben, ausgestattet mit einem Rührer und Intensivkühler, vorgelegt, unter Stickstoffatmosphäre auf 80°C erhitzt und 21,28 g (0,25 mol) Piperazin zugegeben. Das Reaktionsgemisch wurde innerhalb von 2 h bis zu einer Temperatur von 140 °C aufgeheizt. Nach 30 min wurde der Rückflußkühler durch eine Destillationsbrücke ausgetauscht, unter langsamer Erhitzung (innerhalb von 2 h) auf 205°C das Reaktionswasser abdestilliert und schließlich bei 205-210 °C gerührt bis die Aminzahl unter 2 mg KOH/g gefallen war. Das erhaltene Polyamidodimerat war bei Raumtemperatur hochviskos und hellbraun.
Folgende Kennzahlen wurden bestimmt: Säurezahl= 44,9 mg KOH/g, Aminzahl: 0.7 mg KOH/g, Differenz= 44.2 mg KOH/g.
Beispiel 1 demonstriert exemplarisch die Herstellung einer Carboxylgruppen-terminierten Zwischenverbindung (z).

### Beispiel 2:

Die Umsetzung des Polyamidodimerats gemäß Beispiel 1 zu einem erfindungsgemäßen Harz kann wie oben beschrieben nach beliebigen Methoden erfolgen. Als beispielhafte Herstellvorschrift sei genannt:
100 g Polyamidodimerat gemäß Beispiel 1 und 41 g Pentaerythrit+5EO-triacrylat (Triacrylat eines Anlagerungsproduktes von 5 mol Ethylenoxid an 1 mol Pentaerythrit) werden in Gegenwart von 2 g Methansulfonsäure und 150 mg MeHQ zunächst unter Atmosphärendruck bei 90°C verestert. Während der gesamten Reaktion wird Luft durch die Reaktionslösung geleitet. Sobald kaum noch Reaktionswasser abdestilliert, wird Vakuum angelegt und destilliert bis die Säurezahl unter 5 mg KOH/g gefallen ist.

## Patentansprüche

1. Bei 25 °C flüssige Acrylat-Gruppen enthaltende Harze, **dadurch** erhältlich, dass man in einer ersten Stufe Polycarbonsäuren (a), die pro Molekül mindestens 2 Carboxylgruppen und mindestens 2 C-Atome enthalten mit Polyaminen (b), die pro Molekül mindestens 2 Aminogruppen und mindestens 2 C-Atome enthalten, derart umsetzt, dass eine Zwischenverbindung (z) resultiert, die Carboxylgruppen-terminiert ist und diese Zwischenverbindung (z) in einer zweiten Stufe derart funktionalisiert, dass man deren freie Carboxylgruppen in ein oder mehreren Stufen mit ein oder mehreren (Meth)acrylatgruppen ausrüstet.

2. Harze nach Anspruch 1, wobei es sich bei den Polycarbonsäuren (a) um Dimerfettsäuren handelt.

3. Harze nach Anspruch 1 oder, wobei man die Polyamine (b) auswählt aus der Gruppe Ethylendiamin, Hexamethylendiamin, Diaminopropan, Piperazin und Aminoethylpiperazin.

4. Verfahren zur Herstellung von Harzen nach einem der Ansprüche 1 bis 3, indem man in einer ersten Stufe Polycarbonsäuren (a), die pro Molekül mindestens 2 Carboxylgruppen und mindestens 2 C-Atome enthalten mit Polyaminen (b), die pro Molekül mindestens 2 Aminogruppen und mindestens 2 C-Atome enthalten, derart umsetzt, dass eine Zwischenverbindung (z) resultiert, die Carboxylgruppen-terminiert ist und diese Zwischenverbindung (z) in einer zweiten Stufe derart funktionalisiert, dass man deren freie Carboxylgruppen in ein oder mehreren Stufen mit ein oder mehreren (Meth)acrylatgruppen ausrüstet.

5. Verfahren nach Anspruch 4, wobei man die erste und/oder zweite Stufe in Gegenwart eines Verdünners oder Reaktivverdünners durchführt, mit der Maßgabe, dass Verdünner bzw. Reaktivverdünner OH-Gruppen-frei sind, sofern sie in der ersten Stufe eingesetzt werden.

6. Verfahren nach Anspruch 4 oder 5, wobei man die erste Stufe in Gegenwart einer Monocarbonsäure mit 6 bis 12 C-Atomen durchführt.

7. Strahlungshärtbare Beschichtungs-Zusammensetzung enthaltend eine vernetzbare Verbindung und einen Photoinitiator, wobei die vernetzbare Verbindung mindestens ein Harz gemäß den Ansprüchen 1 bis 4 enthält.

8. Zusammensetzung nach Anspruch 7, die zusätzlich ein Pigment enthält und die eine Druckfarbe ist.

9. Verwendung von Zusammensetzungen gemäß Anspruch 8, für den Offsetdruck.
